# EUROPEAN PATENT APPLICATION

(11) **EP 1 901 283 A2**
(43) Date of publication of application: **19.03.2008**
(21) Application number: 07253664.2
(22) Date of filing: 14.09.2007
(51) Int. Cl.: G10L 15/22, G10L 15/18

(54) **Automatic generation of statistical laguage models for interactive voice response applacation**

(30) Priority: 14.09.2006 US 522107
(71) Applicant: Intervoice Limited Partnership, Las Vegas, NV 89119 (US); Language Computer Corporation, Richardson, TX 75080 (US)
(72) Inventor: Balakrishna Mithun, Dallas, TX 75252 (US); Ellis K.Cave, TX 75093 (US)
(74) Representative: Jackson, Richard Eric

(57) **Abstract**

A Statistical Language Model (SLM) that can be used in an ASR for Interactive Voice Response (IVR) systems in general and Natural Language Speech Applications (NLSAs) in particular can be created by first manually producing a brief description in text for each task that can be performed in an NLSA. These brief descriptions are then analyzed, in one embodiment, to generate spontaneous speech utterances based pre-filler patterns and a skeletal set of content words. The pre-filler patterns are in turn used with Part-of-Speech (POS) tagged conversations from a spontaneous speech corpus to generate a set of pre-filler phrases. The skeletal set of content words is used with an electronic lexico-semantic database and with a thesaurus-based content word extraction process to generate a more extensive list of content words. The pre-filler phrases and content words set, thus generated, are combined into utterances using a lexico-semantic resource based process. In one embodiment, a lexico-semantic statistical validation process is used to correct and/or add the automatically generated utterances to the database of expected utterances. The system requires a minimum amount of human intervention and no prior knowledge regarding the expected user utterances, and the WWW is used to validate the word models. The system requires a minimum amount of human intervention and no prior knowledge regarding the expected user utterances in response to a particular prompt.

## Description

### TECHNICAL FIELD

This invention relates to the automatic generation of statistical language models for Interactive Voice Response (IVR) systems and more particularly to the automatic generation of such language models for use in Directed Dialog Speech Applications (DDSAs).

### BACKGROUND OF THE INVENTION

The current generation of telephone based Directed Dialog Speech Applications (DDSAs) predominantly use Context Free Grammars (CFGs) instead of Statistical Language Models (SLMs) to determine what words or phrases a user has uttered. In a CFG system, an application developer "guesses" the set of responses (words or phrases) that a user might speak in response to a specific prompt, and defines these guesses in a CFG. IVR accuracy using the CFG method is directly dependent on how well the CFGs' cover the range of actual user responses at every prompt. DDSAs are also known for their somewhat restricted and user-unfriendly dialog style, as DDSAs must not allow the user to direct the dialog. In a DDSA, the system must ask all the questions, to keep the user from utterances outside the scope of the pre-defined CFGs. In a DDSA, users cannot ask open-ended questions, since it would be impossible to pre-define a CFG to cover all of the possible utterances.

In spite of these constraints, in current usage, CFG's have yielded effective interactive dialog applications. However, most applications require some tuning of the CFG set using real captured dialogs before the final application goes live. SLM-based systems, while opening the possibilities of more natural dialogs, typically require much more development effort than do DDSAs. SLM-based systems, called Natural Language Speech Applications or NLSAs, are relegated to specific applications where pre-determination of user utterances are not practical, due to the wide range of expected responses. Thus, typically, CFG-driven ASRs are used in DDSAs which SLM-driven ASRs are used in NLSAs.

The preference for CFGs in Interactive Voice Response (IVR) systems can be attributed to the reasonably high accuracy of CFG based systems to identify the users requests, coupled with the difficulty of obtaining corpora to train SLMs for various domains. This preference is also justified by the fact that CFGs provide predetermined semantic tags and arguments, eliminating the requirement to determine the semantics of the utterance, though CFGs restrict applications to DDSAs. A SLM based ASR requires semantic analysis of some sort to extract the meaning of a user's utterance. NLSAs also require automatic speech recognition (ASR) engines with a low transcription Word Error Rate (WER) to avoid confusion in the subsequent semantic analysis. However these SLM-based ASRs will allow a user to use a much more natural dialog style, making a NLSA.

However, the generation of reliable CFGs is labor intensive and suffers from the lack of coverage, especially when a new task or option is introduced in the application, or even when a system prompt is changed to make it more clear. The strength of a CFG language model lies in its ability to minimize the search space of the ASR Hidden Markov Model (HMM), increasing accuracy for "in-grammar" utterances as well as greatly speeding up the HMM searches, which makes real-time dialog systems practical even with lower-power processors. However, CFG systems do place a tight constraint on the users' response to a particular prompt. Variations of the expected responses in a CFG system will usually be classified as a "no-match" to the set of pre-defined CFGs.

For example, at the prompt "do you want your account balance or cleared checks?", a word-spotting CFG system will accept replies with words "check" or "balance" but will, for example, reject responses, such as "account total", or "Tell me how much money I have. ". Since the CFG creation process is predominantly manual, it requires considerable effort by a qualified speech application designer to produce an IVR application with a decent semantic error rate (SemER) (a measure of the errors made when an ASR categorizes the user utterances in an application).

A semantically structured model, containing a combination of statistical n-grams and CFGs, to reduce the manual labor in developing CFGs has been proposed by A. Acero, Y. Y. Wang, and K. Wang, in a paper entitled "A Semantically Structured Language Model," published in Proceedings of Special Workshop in Maui (SWIM), 2004. The proposed method however requires a partially labeled (manually performed) text corpus in the IVR's domain for model training.

Call-routing dialog applications using algorithms such as discussed in a paper by Q. Huang and S. Cox, entitled "Automatic Call-Routing Without Transcriptions," published in Proceedings of Eurospeech, 2003, have been proposed to deal with the IVR CFG/SLM generation problems. These proposals, and others along the same line, still require that a developer create a set of speech utterances for the application domain, though the set can be smaller than previous techniques. Another drawback of these automatic call-routing methods is the fact that CFGs are still considered the best models for command-and-control scenarios where user utterances need to be mapped to commands with slots or variables.

I. Bulyko, M. Ostendorf, and A Stolcke published a paper entitled "Class-Dependent Interpolation For Estimating Language Models From Multiple Text Sources," in Tech. Rep., UWeetr-2003-0003, 2003. S. Schwarm, I. Bulyko, and M. Ostendorf published a paper entitled "Adaptive Language Modeling With Varied Sources To Cover New Vocabulary Item," in the IEEE Trans. on Speech and Audio Processing, 2004, proposing a methodology to combine World Wide Web (WWW) based multiple text sources to train SLMs for the conversational speech task. These two methods have been successfully used in transcribing open-domain speech with a continuous spontaneous conversational style. But these methods require a very large set of text corpora (from the WWW or other sources) or a good quality language model (trained previously by any other methodology) for training a new more appropriate language model. The limited availability of domain-specific text corpora (WWW or any other source), as well as response-time/SemER constraints (the language model created by these methods is too huge for a restricted domain and causes high ASR confusion rates and hence the IVR response-time/semantic-accuracy is bad) in good speech applications make it very difficult for these methods to be used for creating language models for IVRs in general and DDSAs in particular.

### BRIEF SUMMARY OF THE INVENTION

A Statistical Language Model (SLM) that can be used in an ASR for Interactive Voice Response (IVR) systems in general and Natural Language Speech Applications (NLSAs) in particular can be created by first manually producing a brief description in text for each task that can be performed in an NLSA. These brief descriptions are then analyzed, in one embodiment, to generate spontaneous speech utterances based pre-filler patterns and a skeletal set of content words. The pre-filler patterns are in turn used with Part-of-Speech (POS) tagged conversations from a spontaneous speech corpus to generate a set of pre-filler phrases. The skeletal set of content words is used with an electronic lexico-semantic database and with a thesaurus-based content word extraction process to generate a more extensive list of content words. The pre-filler phrases and content words set, thus generated, are combined into utterances using a lexico-semantic resource based process. In one embodiment, a lexico-semantic statistical validation process is used to correct and/or add the automatically generated utterances to the database of expected utterances. The system requires a minimum amount of human intervention and no prior knowledge regarding the expected user utterances, and the WWW is used to validate the word models. The system requires a minimum amount of human intervention and no prior knowledge regarding the expected user utterances in response to a particular prompt.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURES 1 and 3 show embodiments of an organizational flow chart in accordance with the invention;

FIGURES 2 show an examples of the flow of a semantic categorization algorithm; and

FIGURE 4 shows one embodiment of an interactive voice response system using automatic SLM generation.

### DETAILED DESCRIPTION OF THE INVENTION

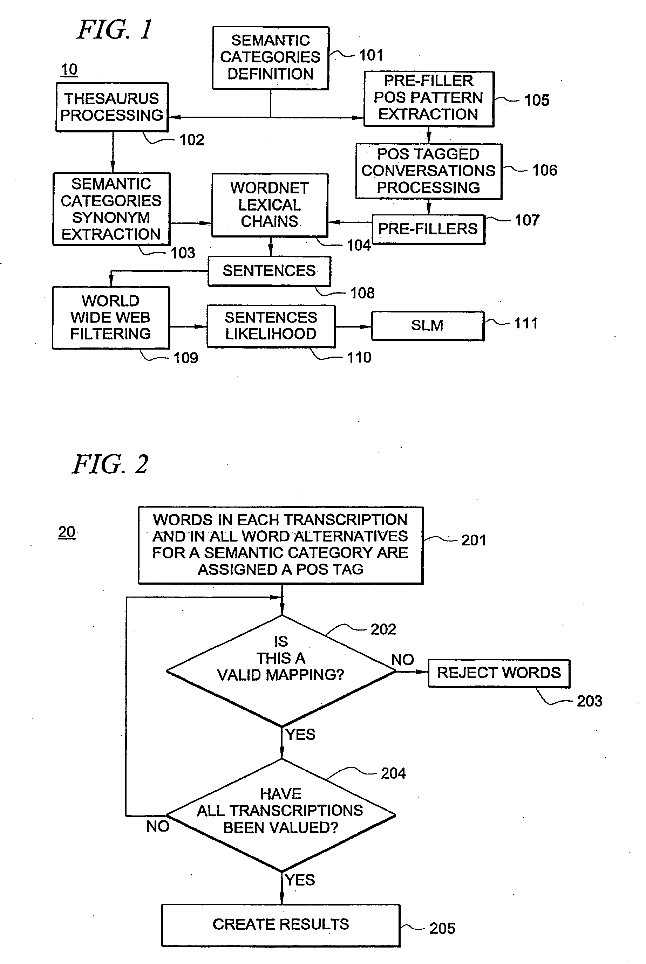

FIGURE 1 shows one embodiment 10 of an organizational flow chart in accordance with the invention in which automatic SLM generation is achieved with minimum manual intervention and without any manually predefined set of domain-specific text corpora, user utterance collection or manually created CFGs for each IVR domain.

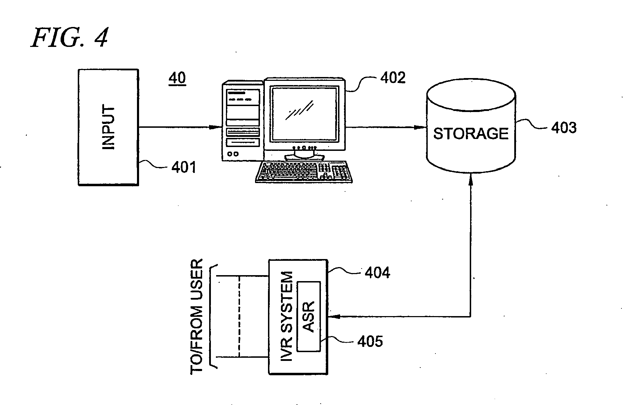

FIGURE 4 shows one embodiment 40 in which IVR system 404 utilizes SLMs generated in accordance with the concepts discussed herein. The SLMs can be generated, for example, using PC 402 and stored in database 403 based upon the system operation discussed with respect to FIGURE 1. PC 402 contains a processor, application programs for controlling the algorithms discussed herein, and memory. Note that the SLMs can be stored in internal memory and that memory can be available to a network, if desired. The SLM's are placed in Automatic Speech Recognizer (ASR) 405 for use by IVR system 404 to connect user utterances to a text message. IVR system 404 can be located physically at the same location as PC 402 and/or storage 403, or it can be located remote there from. PC 402 can, if desired, run the application that enables system 404.

Input 401 is operative to receive the desired semantic task categories along with the brief category descriptions and category task labels from an application designer, and could also be used for communicating with thesaurus 102 (FIGURE 1) or with any of the other elements to be discussed with respect to FIGURE 1 that enable the automatic generation of SLMs.

Returning to FIGURE 1, in order to produce the SLM for a particular dialog state, semantic category labels are required along with a brief description for each one of these labels. In addition, the possible task labels defined by the IVR prompt for each semantic category is also required.

Note that in a true NLSAs system, the concept of "dialog state" or "prompt state" can be confusing since all available tasks are typically available for selection at all times. A user can ask for the account balance, even if the prompt is asking for a check number.

Table 1, which can be generated by manual process 101, presents an example of the input requirements to generate the SLM for the "Account Payment" prompt.

**Table 1: SLM input requirement for "Account Payment" prompt.**

| **Semantic Category** | **Description** | **Task Label(s)** |
|---|---|---|
| arrange_a_payment | users can arrange payments | arrange a payment |
| report_a_payment | users can report previously made payments | report a payment |
| payment_methods | users can hear about payment methods and other payment options | hear payment methods |
| billing_information | users can hear about their billing information or check their account balance | hear complete billing information, check account balance |
| credit_card_payment | users can make a credit card payment | make a credit card payment |

The semantic category description (as shown in Table 1) is used to extract certain pre-filler Part-of-Speech (POS) patterns which are extracted by process 105 and stored as pattern pools.

Table 2 presents some POS patterns extracted to represent the pre-filler words that can be uttered by the user for that particular semantic category. In Table 2, prp stands for preposition, nn (or NN) stands for noun, vb is verb, prn is pronoun, etc.

**Table 2: Pre-filler words extracted for some POS patterns.**

| **Category & Description** | **POS Pattern & Example Utterance** |
|---|---|
| Cable_Account - Users want to check their cable account bill | prp vb nn - I want NN I need NN vb prp nn - check my NN give me NN vb nn - pay NN prp vb vb nn - I'd like to have NN prp vb prp nn - (can) you give me NN |

After the manual extraction of POS patterns (for example) from a small number (for example 20) of semantic category descriptions, it is possible to observe that these selected manual pre-filler POS patterns and their generalizations cover most of the POS patterns present in the remaining non-analyzed semantic category descriptions. Hence, the system can use the identified pool of patterns for all the remaining semantic category descriptions to keep the manual labor to a minimum. The filtering processes, such as lexico-semantic filtering 104 and WWW filtering 109, will then handle non-compatibility of the generalized POS patterns with certain semantic categories.

The POS patterns from the pool (process 105) are then searched for in a large number, say 1126, POS tagged conversations determined by process 106 using, for example, the SwitchBoard-1 conversations from the TreeBank-3 corpus obtained from the Linguistic Data Consortium (LDC) at the University of Pennsylvania to extract spontaneous/conversational speech style pre-filler phrases.

Three different pre-filler word sequence extraction methods are used by process 106. First, there are the "pure POS pattern pre-filler words" which are identified pre-filler words that adhere to the POS patterns e.g., "I want credit" for the pattern "PRP (pronoun) VB (verb) NN (noun)". Second, there are "POS pre-filler words with gaps" which are identified pre-filler words that comply with the POS patterns but with some gaps between POS tags in the pattern e.g., "I want to get another brand" for the pattern "PRP VB VB NN". Third, there are "POS pattern pre-filler words with additional peripheral words" which can be identified pre-filler words for "pure POS pattern pre-filler words" or "POS pattern pre-filler words with gaps" but with some additional peripheral words in the beginning and end of the POS pattern e.g., "Could I have something" for the pattern "PRP VB NN". The "NN" words are removed from all the identified pre-filler words and the "PRP" words are replaced with appropriate personal or possessive pronouns depending on the POS pattern e.g., "PRP" words for the pattern "PRP VB NN" are replaced by "I" and "we".

In parallel with the above pre-filler word sequence generation mechanism (processes 105, 106 generate the pre-filler phrases stored in process 107), the semantic category descriptions are also used to generate a set of semantic category synonyms. For each semantic category, the system uses its description (from Table 1) to extract a skeletal set of content words. A thesaurus is then used (process 102) to find a set of alternatives closely related to these sets of content words.

By way of example, Table 3 presents the word alternatives extracted for the category "cellular_phone".

**Table 3: Extracted content word alternatives for a sample category.**

| **Category & Description** | **Content Words and Alternatives** |
|---|---|
| Cellular_Phone - Users want to check their cellular phone bill | car telephone, cell phone, cell telephone, cellular phone, digital telephone, field telephone, satellite telephone, wireless telephone |

The output from the thesaurus contains good alternatives for the content words, however the output also contains irrelevant words e.g., for the category "arrange_a_payment", the alternatives are found by combining the closely related words for "arrange" and "payment" and this leads to some noisy alternatives like "adapt deposit" or "organize fee".

WordNet, such as described by C. Fellbaum, in the MIT Press, 1998, of which is incorporated herein by reference, is a lexico-semantic database containing open class words like nouns, verbs, adverbs and adjectives grouped into synonym sets. Each synonym set or WordNet synset represents a particular lexical concept. WordNet also defines various relationships that exists between lexical concepts using WordNet semantic relations. D. Moldovan and A. Novischi in their paper entitled, "Lexical Chains For Question Answering," published in Proceedings of Coling, 2002 (hereinafter "*Moldovan*"), of which is incorporated herein by reference, presents a methodology for finding topically related words by increasing the connectivity between WordNet synsets (synonym set for each concept present in WordNet) using the information from WordNet glosses (definition present in WordNet for each synset).

Thus, the system determines, via process 103, if a pair of words are closely related by not only looking at the WordNet synsets but also by finding lexical paths between the word pair using the WordNet synsets and glosses. To remove the noisy alternatives, process 103 determines (for example, using the procedure outlined in the above-identified *Moldovan* paper) a connection between the words present and alternatives therefore. For example, the lexical chain between the words "adapt" and "deposit" has a low confidence score, while the word pair "prepare" and "amount" has a relatively higher confidence score. Hence, an alternative is considered to be valid and is added to the list if the lexical chain confidence score for its content words is greater than a threshold value. In summary, after the completion of these steps, a set of possible pre-filler and content words representing each IVR prompt is collected at process 107 and 103, respectively.

The system then attempts, at process 108, to combine each pre-filler phrase with every content word phrase to form a set of utterance alternatives. This involves combining each identified pre-filler word sequence collected at process 107 with all the content word sequences collected at process 103. For example, if "n" pre-filler word sequences are collected at process 107 and "m" content word sequences are collected at process 103 then a total of "n*m" utterance alternatives are formed. These word alternatives are then filtered using process 104 to remove those (pre-filler word sequence + content word sequence) combinations that are incompatible. For example, for the pre-filler word sequence "Check my" and the content word sequence "account balance", their combination makes sense. However, the pre-filler word sequence "Check my" combined with the content word sequence "operator" would be filtered. Hence, a particular pre-filler phrase combination with a content word phrase is allowed only if a lexical chain is determined between the pre-filler phrase verb and the noun/verb in the content word phrase (if it is a noun phrase/verb phrase) with a confidence score greater than a defined threshold.

The lexical chain confidence score for a word pair is usually determined by the presence of one word in the WordNet gloss of the other word and vice-versa (procedure outlined in the above-identified *Moldovan* paper). The lengthier the chain, i.e., extending to the glosses and reverse-glosses of the hyponyms or hypernyms for the word pair, the smaller is the lexical chain confidence score (procedure outlined in the above-identified *Moldovan* paper). The complete set of sentences thus formed are then filtered using a statistical validation mechanism, such as WWW filtering process 109, which can, for example, use a search engine (such as Google) to search for the new sentences as one cohesive unit on the web. News groups can be used in this context since they are close to conversational style text. If the count (number of web page links) returned by the search engine exceeds a defined threshold then the sentence is added via process 110 to the data set later used to build the SLM. The count provided by the web for a particular alternative is also used to represent its probability distribution in the SLM data set which will be used later to build the SLM.

One method of evaluating the SLMs, is to use them as language models for an ASR and compare the WER/SemER produced by such an ASR for live user utterances against an ASR using the manually generated CFG grammars. To evaluate the SemER for the utterances transcribed by an ASR loaded with SLMs, a WordNet lexical chain based semantic categorizer is used to convert the ASR transcriptions into valid semantic categories. These extracted semantic categories are then compared with the actual user utterance semantic categories to obtain a semantic error rate.

FIGURE 2 shows one embodiment 20 of a semantic categorization algorithm. In process 201, each transcription and all the word alternatives for a semantic category are assigned a POS tag using, for example, the Brill's POS tagger and a Word Sense Disambiguation tool. Process 202 then determines if the mapping between a given transcription and the semantic category's word alternative is correct. Process 202 returns true (yes) only if there exists a lexical chain between every word in the word alternative and at least one transcription word. If no, the word or word pair is rejected, process 203. The Lexical Chains Score (LCS) is the sum of the semantic similarity values for the best lexical chains from every word in the alternative to a word in the transcription. Process 202 identifies the best LCS for such a valid (transcription, word alternative) pair. Each semantic category is then assigned the best LCS value from all its word alternatives. A transcription is assigned to a semantic category if the LCS value of the transcription for that semantic category is greater than an absolute LCS threshold value. To allow a transcription to map to more than one semantic category, a LCS difference threshold value is defined. Hence, any transcription is first mapped to the best semantic category (with the highest LCS value which is greater than the absolute LCS threshold value) and, to any other semantic category (with a LCS value > Max ((LCS value of the best semantic category - LCS difference threshold value), absolute LCS threshold value)). Process 202 also defines a LCS difference decaying factor, which is the factor used to reduce the LCS difference threshold value as the number of semantic categories assigned to a transcription grows.

Process 204 determines if all transcriptions have been valued. If so, process 205 creates a baseline result in order to test the proposed SLM generated transcriptions.

In one example, 20804 utterances were collected for 55 prompts. A total of 23 CFGs/SLMs are needed to cover all of the 55 prompts and on average, each prompt elicits responses with 10.09 different semantic categories. The baseline WER and SemER results for the 208.04 utterance set in the example, are produced by, for example, a Nuance 8.5v commercial recognizer and a SONIC system such as described by Bryan Pellom, in the published paper entitled SONIC: The University of Colorado Continuous Speech Recognizer, tech report #TR-CSLR-2001-01, which is incorporated herein by reference. SONIC was trained for the telephone transcription task using 160 CallHome and 4826 Switchboard-1 conversation sides.

Table 4 presents the transcription WER results obtained for the various tests performed on our 20804 utterance test set.

**Table 4: Transcription WER results obtained for the test set.**

| | Test User Utterance Set (20804 Utterances) | | | | |
|---|---|---|---|---|---|
| | Error (%) | | | | Total Correct (%) |
| | Sub | Del | Ins | Total | |
| Oracle-SLM | 5.2 | 4.5 | 5.3 | **15.0** | **90.3** |
| Nuance-CFG | 3.5 | 39.4 | 2.0 | **44.9** | **57.1** |
| Sonic-CFG | 20.2 | 31.9 | 9.1 | **61.2** | **47.9** |
| AutoSLM | 29.9 | 12.4 | 7.1 | **49.4** | **57.7** |
| AutoSLM + SRI SLM | 23.7 | 8.2 | 8.6 | **40.5** | **68.1** |

Table 5 presents the Semantic Error Rate (SemER) results obtained for the transcriptions in Table 4.

**Table 5: Semantic Error Rate (SemEr) results obtained for the transcriptions in Table 4.**

| | Collected Test User Utterance Set (20804 Utterances) | | | | | | |
|---|---|---|---|---|---|---|---|
| | Error (%) | | | | | | Total Correct |
| | Mis Cat | In CFG | Out CFG | Ins | Del | Total | |
| Oracle-SLM | 1.3 | 2.9 | 3.1 | 1.2 | 0.2 | **8.7** | **92.5** |
| Nuance-CFG | 1.1 | 1.2 | 12.0 | 0.2 | 0.2 | **14.7** | **85.6** |
| Sonic-CFG | 13.1 | 3.0 | 13.6 | 2.1 | 0.4 | **32.3** | **69.8** |
| AutoSLM | 4.6 | 4.2 | 7.3 | 2.0 | 0.3 | **18.4** | **83.6** |
| AutoSLM + SRI SLM | 3.5 | 3.0 | 8.5 | 0.4 | 0.3 | **15.7** | **87.4** |

Each utterance transcription generated by the various systems presented in Table 4 is classified into one or more semantic categories using the semantic categorization technique discussed above. An absolute LCS threshold value of 65.0 was used with an LCS difference threshold value of 5.0, and a LCS difference decaying factor of 0.1. These values were derived by using the manual transcriptions of 20804 utterances as a development set. This resulted in a best SemER of 4.6%. A "NO-MATCH" category is used when an utterance does not map to any other category.

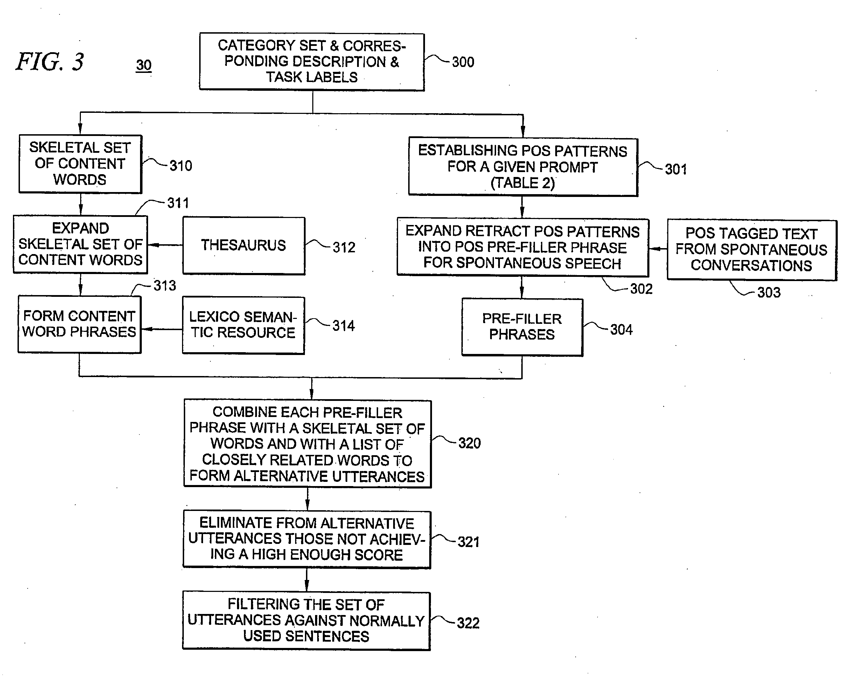

FIGURE 3 shows one embodiment 30 of an algorithm for performing spontaneous SLM generations. Each valid user utterance can be broken into three parts: pre-filler words, content words, and post-filler words. However, pre-filler words and content words constitute the majority of the utterance transcription words and have the biggest influence on the system. Process 300 gathers a category set together with its corresponding description and task labels. This information is sent to two places for parallel processing.

Process 301 accepts information from process 300 and establishes POS patterns for each prompt. Process 302 then expands the POS patterns into POS pre-filler phrases for spontaneous speech conversations, as obtained from process 303. Process 304 gathers the pre-filler phrases.

Process 310 also accepts information from process 300 and adds a skeletal set of content words so that process 311, working in conjunction with a thesaurus (process 312) can expand (filter) the skeletal set of content words so that process 313, working in conjunction with lexico-semantic resources (process 314) (another filter) can form content work phrases.

Process 320 then combines the pre-filler phrases from process 304 with the content word phrases from process 313 to form alternative possible utterances. Process 306 then eliminates from the alternative utterances these utterances not achieving a high enough score. Process 322 then filters the remaining utterances against normally used sentences, if desired.

In Table 4, *MisCat* errors are due to mismatches between the semantic category proposed by the transcription and the actual utterance semantic category. *In*CFG errors are due to the transcription proposing a semantic category while the utterance's actual semantic category is a NO-MATCH. *Out*CFG errors are due to the transcription proposing a NO-MATCH while the utterance actually has a valid semantic category. *Ins* errors are due to the insertion of a semantic category by the transcription while the utterance's actual semantic category list does not contain such a semantic category. *Del* errors are due to the deletion of a semantic category present in the utterance's actual semantic category list while the semantic category is missing in transcription's semantic category list, *Total Error* (%) is the sum of all the five (5) different error counts divided by the total number of reference semantic categories. *Total Correct*(%) is 100 - *MisCat*(%) - *InCFG*(%) - *OutCFG*(%) - *Del*(%).

Table 6 presents the various errors possible due to the variations in the number of categories proposed by the transcription and the number of categories present in the reference list.

**Table 6: Various possible semantic error scenarios for an utterance.**

| Transcription Semantic Category List Size | Reference Semantic Category List Size | | |
|---|---|---|---|
| | > 1 | = 1 | = 0 |
| > 1 | MisCat, Ins or Del | MisCat, Ins | InCFG |
| = 1 | MisCat, Del | MisCat | InCFG |
| = 0 | OutCFG | OutCFG | |

For SLM evaluation, the WordNet lexical chain based semantic categorizer is used to classify transcriptions from the SLM-loaded ASR into valid semantic categories. The SLM-loaded ASR response semantic categories are then compared against the manually labeled utterance semantic categories. By using the automatically generated SLMs, the manual labor involved in the IVR application development is reduced while the semantic error rate is comparable with the ASR loaded with manually generated grammars/SLMs.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for generating a database of acceptable utterances for use in a speech recognition system, said method comprising:
accepting semantic categories and task descriptions defined by text descriptions; outputting, based on an accepted one of said categories and description, said category a list of potential utterances that may be spoken by a user to select said one category; and
training a SLM for an ASR system based on said potential utterances.

2. A method for generating a database of acceptable utterance for use in a speech recognition system comprising, said generating occurring without human intervention, said method comprising:
establishing part of speech (POS) patterns for a given prompt;
expanding said POS patterns into possible pre-filler phrases for spontaneous speech; and
eliminating from said possible pre-filler phrases those phrases with a high probability of being inappropriate for said given prompt.

3. The method of claim 2 further comprising:
combining each pre-filler phrase with a skeletal set of words and with a list of closely related words to form a set of alternative utterances; and
using a lexical chain to eliminate from said set of utterance alternatives those utterances that do not have a confidence score above a certain level.

4. The method of claim 3 wherein the POS patterns are expanded automatically.

5. The method of claim 3 wherein the pre-filler phrases are eliminated automatically.

6. The method of claim 3 wherein said expanding comprises:
presenting said POS patterns to a number of POS tagged pre-recorded conversations; and
based on said presenting, extracting said skeletal set of possible pre-filler words for storage in said database.

7. The method of claim 6 further comprising:
presenting said skeletal set of possible words to a thesaurus to obtain said list of closely related words.

8. The method of claim 7 further comprising:
filtering said set of utterances using statistical validation to eliminate those utterances that do not appear in patterns more than a given number of times.

9. The method of claim 8 wherein said statistical validation is a search engine on a general purpose public searchable network.

10. The method of claim 3 further comprising:
evaluating said set of utterances using a WordNet-based process.

11. A method of automatically establishing a set of SLMs for use in an IVR system, said method comprising:
generating for a given IVR prompt an expanded set of possible pre-filler POS phrases based upon manually extracted POS patterns from a relatively small sample of semantic category descriptions;
eliminating inappropriate phrases from said generated set to establish a first level set of POS phrases;
combining each first level pre-filler phases with a skeletal set of content words and with a list of closely related words to form alternative utterances; and
filtering said utterances to achieve a final set of SLMs.

12. The method of claim 11 wherein said eliminating comprises:
presenting said expanded set of POS phrases to POS tagged pre-recorded conversations.

13. The method of claim 12 wherein said pre-recorded conversations comprise SwitchBoard-1 conversations.

14. The method of claim 11 wherein said filtering comprises:
determining from said set of skeletal words an expanded set of words having alternative meanings; and
eliminating from said alternative words those words that are irrelevant in the context of the IVR prompt.

15. The method of claim 14 wherein said alternative meanings are determined using a thesaurus.

16. The method of claim 14 wherein said eliminating comprises:
using lexical paths between word pairs to generate a confidence score; and
eliminating from said expanded set of words those words having a determined low confidence score to create highly relevant content word sequences.

17. The method of claim 16 further comprising:
combining each identified pre-filler sequence with all the content word sequences to create said SLMs.

18. A system for automatically establishing a set of SLMs for use in an IVR system, said system comprising:
means for generating for a given IVR prompt an expanded set of possible pre-filler POS phrases based upon manually extracted POS patterns;
means for eliminating inappropriate phrases from said generated set of phrases; means for combining said expanded set of possible pre-filler phrases with a skeletal set of words to form utterances; and
means for filtering said utterances to achieve a final set of SLMs.

19. The system of claim 18 wherein said eliminating means comprises:
means for presenting said expanded set of POS phrases to POS tagged pre-recorded conversations.

20. The system of claim 18 wherein said filtering means comprises:
means for determining from said set of skeletal words an expanded set of words having alternative meanings; and
means for eliminating from said alternative set of words those words that are irrelevant in the context of a particular IVR prompt.

21. The system of claim 20 wherein said eliminating means comprises:
means for using a lexical path confidence score for each lexical path to eliminate from said expanded set of words those words having a low confidence score to create highly relevant content word sequences.

22. The system of claim 21 further comprising:
means for combining each identified pre-filler sequence with all the highly relevant content word sequences to create said SLMs.

23. A computer program for automatically establishing a set of SLMs for use in an IVR system, said program comprising:
code for generating for a given IVR prompt an expanded set of possible pre-filler POS phrases based upon manually extracted POS patterns;
code for eliminating inappropriate phrases from said generated set of phrases; code for combining said expanded set of possible pre-filler phrases with a skeletal set of words to form utterances; and
code for filtering said utterances to achieve a final set of SLMs.

24. The computer program of claim 23 wherein said eliminating code comprises:
code for presenting said expanded set of POS phrases to POS tagged pre-recorded conversations.

25. The computer program of claim 24 wherein said filtering code comprises:
code for determining from said set of skeletal words an expanded set of words having alternative meanings; and
code for eliminating from said alternative set of words those words that are irrelevant in the context of a particular IVR prompt.

26. The computer product of claim 25 wherein said eliminating code comprises:
code for eliminating from said expanded set of words those words having a determined low lexical path confidence score to create highly relevant content word sequences.
